# FASCICULE DE BREVET EUROPEEN

(11) **EP 2 414 239 B1**
(45) Date de publication et mention de la délivrance du brevet: **08.06.2016**
(21) Numéro de dépôt: 10723181.3
(22) Date de dépôt: 01.04.2010
(51) Int. Cl.: B64F 1/12, F16B 21/16

(54) **HARPON D'ANCRAGE PAR EXEMPLE D'UN AÉRONEF ET SYSTÈME D'ANCRAGE COMPORTANT UN TEL HARPON**
VERANKERUNGSHARPUNE, ZUM BEISPIEL FÜR EIN FLUGZEUG, UND SOLCH EINE HARPUNE ENTHALTENDES VERANKERUNGSSYSTEM
ANCHORING HARPOON, FOR EXAMPLE FOR AN AIRCRAFT, AND ANCHORING SYSTEM INCLUDING ONE SUCH HARPOON

(30) Priorité: 03.04.2009 FR 0952175
(43) Date de publication de la demande: 08.02.2012
(73) Titulaire: DCNS, 75015 Paris (FR)
(72) Inventeur: AFFRE DE SAINT ROME, Ronan, F-29600 Carantec (FR)
(74) Mandataire: Jacobson, Claude
(86) Numéro de dépôt international: PCT/FR2010/050625
(87) Numéro de publication internationale: WO 2010/112780

(56) Documents cités:
- WO-A-91/04910
- GB-A- 930 794
- GB-A- 2 075 931
- US-A- 3 303 807
- US-A- 3 552 688

## Description

La présente invention concerne un harpon d'ancrage notamment d'un aéronef apte à coopérer avec une grille d'ancrage d'une plate-forme et un système d'ancrage comportant un tel harpon.

De tels harpons et de tels systèmes d'ancrage sont déjà connus de façon générale dans l'état de la technique.

On connaît le document WO 91/04910, qui est considéré comme l'art antérieur le plus proche et décrit les caractéristiques du préambule de la revendication 1.

Ainsi par exemple le document FR-A-2 701 689 décrit un harpon destiné à équiper un aéronef à voilure tournante tel que par exemple un hélicoptère et qui peut être tiré en direction d'une plate-forme d'appontage d'un navire afin que la tête du harpon se fixe sur la grille et forme ainsi un point d'ancrage de l'aéronef, facilitant notamment l'opération d'appontage de celui-ci.

Le harpon d'ancrage décrit dans ce document comporte des moyens en forme de cylindre dans lesquels se déplacent des moyens en forme de piston munis d'une tige s'étendant au-delà des moyens en forme de cylindre et dont l'extrémité libre comporte une tête de harpon d'accrochage dans la grille. Cette tête de harpon est en effet munie de doigts de retenue dans la grille, déplaçables radialement entre une position escamotée et une position active par des moyens de commande.

De tels harpons ont déjà été mis en oeuvre avec succès sur de nombreux navires pour assurer l'ancrage par exemple d'aéronefs de type hélicoptères.

Depuis quelques temps, on assiste également à de très nombreuses tentatives d'embarquement d'aéronefs de type drones à voilure tournante sur les plates-formes notamment militaires.

La demanderesse a d'ailleurs mis au point et testé avec succès un système d'appontage et de décollage automatiques d'un drone à voilure tournante sur et à partir d'un tel navire.

La mise en oeuvre de ces drones nécessite également l'utilisation de harpons et de grilles d'ancrage.

Des études ont montré que l'adaptation des harpons d'ancrage déjà connus pour les hélicoptères directement sur des drones à voilure tournante, n'était pas envisageable avec succès.

En effet, ces études ont fait ressortir des problèmes de taille, d'alimentation, d'entretien, etc...

Le but de l'invention est donc de résoudre ces problèmes.

A cet effet, l'invention a pour objet un harpon d'ancrage notamment d'un aéronef, apte à coopérer avec une grille d'ancrage d'une plate-forme, comportant des moyens en forme de vérin comprenant des moyens en forme de cylindre dans lesquels se déplacent des moyens en forme de piston munis d'une tige s'étendant au-delà des moyens en forme de cylindre et dont l'extrémité libre comporte une tête de harpon d'accrochage dans la grille, munie de doigts de retenue dans celle-ci, déplaçables entre une position escamotée et une position active par des moyens de commande, les moyens en forme de vérin sont raccordés à une source de fluide sous pression à travers des moyens de commande et caractérisé en ce que cette source de fluide sous pression comporte une cartouche consommable de gaz.

Selon d'autres caractéristiques de l'invention, prises séparément ou en combinaison :
- le gaz est du CO₂,
- les moyens de commande comprennent des moyens formant électrovanne pilotés à l'ouverture et à la fermeture pour alimenter les moyens en forme de vérin,
- les moyens en forme de cylindre du vérin comportent au moins deux portions de cylindre télescopiques l'une dans l'autre et déplaçables entre une position escamotée l'une dans l'autre et une position active en saillie l'une par rapport à l'autre,
- les moyens de commande des déplacements des doigts comprennent un piston de commande déplaçable à coulissement dans la tige du vérin et associé à un actionneur bistable des doigts, déplaçable entre des positions escamotée et active de sortie des doigts par applications successives d'impulsions de pression dans les moyens en forme de vérin,
- l'actionneur bistable est un verrou mécanique rotatif,
- l'actionneur bistable comporte une roue à dents biseautées interposée entre le piston de commande et une tige d'actionnement des doigts, disposés dans un manchon relié à la tige de vérin, l'extrémité du piston en regard de la roue

à dents biseautées comportant elle-même des dents, de manière, lors de l'application des impulsions de pression dans les moyens en forme de vérin et donc des déplacements du piston de commande, à faire tourner la roue à dents biseautées dans le manchon, les dents de la roue étant également adaptées pour coopérer avec des crans successifs de hauteurs différentes du manchon, afin de définir des positions stables, active et escamotée, de la tige d'actionnement des doigts,
- il comporte un ressort de sollicitation de la tige d'actionnement des doigts en position escamotée,
- l'extrémité correspondante des moyens en forme de vérin est associée à l'aéronef et en ce qu'un ressort hélicoïdal de rappel et de plaquage est interposé entre cette extrémité du vérin et la tête de harpon,
- le ressort hélicoïdal est disposé autour des moyens en forme de vérin,
- il comporte des moyens à gâchette d'interdiction du déplacement des doigts vers leur position active tant que la tête de harpon n'est pas en position de butée dans la grille d'ancrage.

L'invention a également pour objet un système d'ancrage notamment d'un aéronef de type drone à voilure tournante qui comprend un harpon d'ancrage tel que décrit précédemment.

L'invention sera mieux comprise à l'aide de la description qui va suivre, donnée uniquement à titre d'exemple, et faite en se référant aux dessins annexés, sur lesquels :
- les figures 1 et 2 représentent des vues en coupe d'un harpon d'ancrage selon l'invention respectivement en positions escamotée et active d'ancrage dans une grille d'ancrage d'une plate-forme,
- la figure 3 représente une vue en perspective éclatée d'une tête de harpon d'accrochage entrant dans la constitution d'un harpon selon l'invention,
- la figure 4 représente un schéma synoptique illustrant l'alimentation en fluide sous pression d'un harpon selon l'invention, et
- la figure 5 illustre le fonctionnement d'un tel harpon.

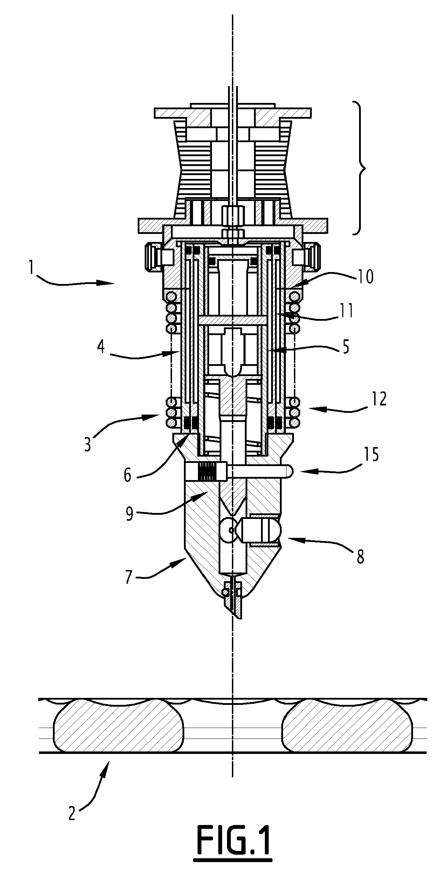

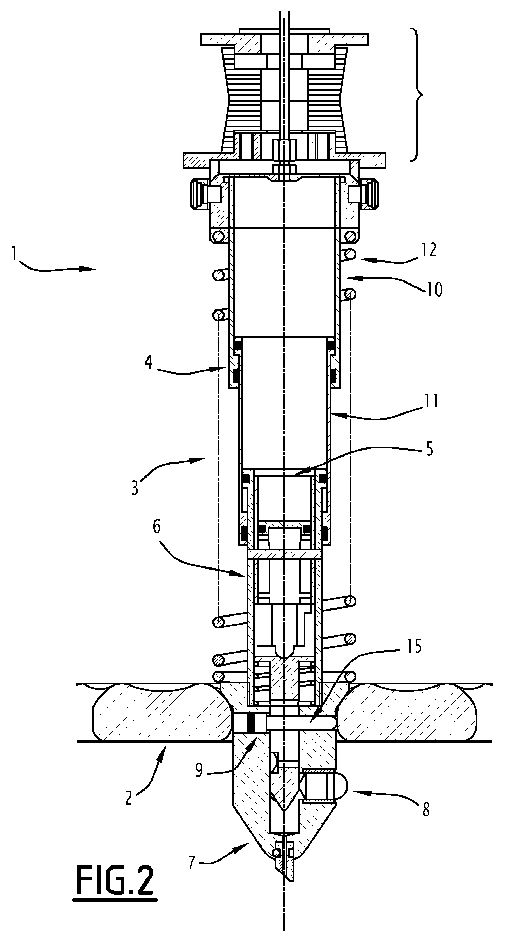

On a en effet illustré sur ces figures et en particulier sur les figures 1 et 2, un harpon d'ancrage notamment d'un aéronef sur une plate-forme de type navire militaire ou autre.

L'aéronef peut par exemple être un drone à voilure tournante.

Ce harpon est désigné par la référence générale 1 sur ces figures et est adapté pour coopérer avec une grille d'ancrage de la plate-forme, cette grille étant désignée par la référence générale 2 sur ces figures.

En fait, le harpon comporte des moyens en forme de vérin désignés par la référence générale 3, comprenant des moyens en forme de cylindre désignés par la référence générale 4, dans lesquels se déplacent des moyens en forme de piston désignés par la référence générale 5.

Ces moyens en forme de piston sont munis d'une tige 6 s'étendant au-delà des moyens en forme de cylindre et dont l'extrémité libre comporte une tête de harpon d'accrochage dans la grille, cette tête de harpon étant désignée par la référence générale 7.

En fait et comme cela est décrit dans le document antérieur mentionné précédemment, cette tête de harpon est munie de doigts de retenue dans la grille, déplaçables radialement entre une position escamotée et une position active par des moyens de commande, comme cela sera décrit plus en détail par la suite.

Sur ces figures, l'un des doigts est désigné par la référence générale 8 et les moyens de commande de ceux-ci par la référence générale 9.

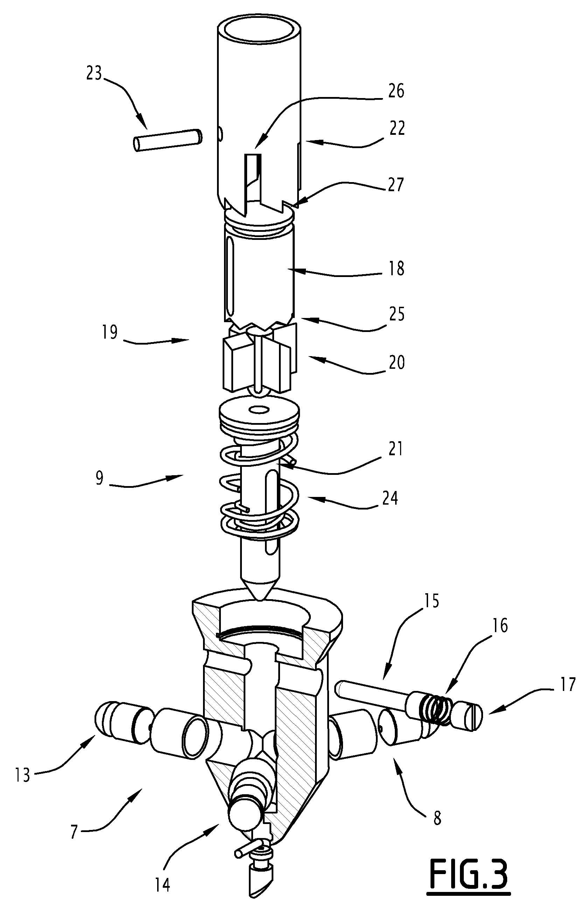

La structure de ces moyens de commande sera également décrite plus en détails en regard de la figure 3.

Si l'on revient aux figures 1 et 2, on constate que les doigts et les moyens de commande sont représentés en position escamotée sur la figure 1 et en position active sur la figure 2, lorsque le harpon est déployé, les moyens de commande étant déplacés dans la tige pour provoquer un déplacement radial des doigts de retenue entre la position escamotée, sur la figure 1, dans la tête du harpon et la position active de retenue sur la figure 2, en saillie radiale par rapport à cette tête pour la bloquer dans la grille.

Pour résoudre les différents problèmes d'intégration à un drone notamment tel que décrit précédemment, dans le harpon d'ancrage selon l'invention, les moyens en forme de cylindre du vérin comportent au moins deux portions de cylindre télescopiques l'une dans l'autre et déplaçables entre une position escamotée l'une dans l'autre et une position active d'ancrage en saillie l'une par rapport à l'autre, telles qu'illustrées sur ces figures 1 et 2 respectivement.

Sur ces figures, les deux portions de cylindre télescopiques l'une dans l'autre sont désignées respectivement par les références 10 et 11.

La portion de cylindre supérieure 10 est alors associée à des moyens d'accrochage sur le drone, ces moyens présentant n'importe quelle structure classique appropriée, tandis que l'autre extrémité de cette portion de cylindre supérieure 10 est adaptée pour recevoir la portion de cylindre inférieure 11 qui porte elle-même la tige 6 dont l'extrémité libre porte la tête de harpon 7.

Les moyens en forme de vérin sont alors raccordés à une source de fluide sous pression à travers des moyens de commande pour contrôler leur fonctionnement c'est-à-dire le déploiement du harpon d'ancrage et son accrochage ou son décrochage par rapport à la grille d'ancrage.

A cet effet, un ressort hélicoïdal 12 de rappel et de plaquage est interposé entre l'extrémité de la portion de cylindre supérieure associée à l'aéronef et la tête de harpon pour assurer comme cela est illustré sur la figure 2, lorsque la tête du harpon est ancrée dans la grille, un plaquage correct du drone sur la plate-forme.

La tête de harpon 7 peut être analogue à celle qui a déjà été décrite dans le document mentionné précédemment et comporter par exemple trois doigts de retenue disposés à 120° les uns par rapport aux autres et désignés par exemple par les références générales 8, 13 et 14 sur la figure 3. Ces doigts sont alors déplaçables entre une position escamotée et une position active en saillie radiale par rapport au reste de la tête afin d'ancrer le harpon dans la grille sous le contrôle des moyens de commande désignés par la référence générale 9 sur les figures 1, 2 et 3.

De façon classique également, la tête de harpon 7 peut comporter une gâchette d'armement de ces moyens de commande 9 pour interdire le déplacement des doigts vers leur position active tant que la tête de harpon n'est pas en position de butée dans la grille d'ancrage, c'est-à-dire en position correcte d'ancrage dans la grille.

Cette gâchette a été également décrite antérieurement et est désignée par la référence générale 15 sur cette figure 3.

Cette gâchette 15 est alors disposée transversalement dans la tête de harpon 7, fait saillie radialement à partir de la tête et est associée à un ressort 16 et à un organe de butée 17 pour être repoussée dans la tête de harpon lorsque celle-ci est en position correcte dans la grille d'ancrage comme cela est illustré sur la figure 2, et permettre le déplacement des moyens de commande 9 et des doigts de retenue.

Les moyens de commande 9 comprennent quant à eux un piston désigné par la référence générale 18 déplaçable à coulissement dans la tige du vérin et associé à un actionneur bistable des doigts, déplaçable entre des positions escamotée et active de sortie des doigts par applications successives d'impulsions de pression dans les moyens en forme de vérin.

Cet actionneur bistable des doigts est désigné par la référence générale 19 et comporte plusieurs pièces formant ce que l'on appelle communément un verrou rotatif.

Cet actionneur bistable comporte en effet une roue à dents biseautées désignée par la référence générale 20 sur la figure 3, interposée entre le piston de commande 18 et une tige d'actionnement des doigts désignée par la référence générale 21 sur cette figure 3.

Le piston 18 et la roue à dents biseautées 20 sont disposés dans un manchon désigné par la référence générale 22 relié à la tige 6 du vérin par exemple par l'intermédiaire d'une goupille désignée par la référence générale 23.

Un ressort de sollicitation de la tige d'actionnement 21 des doigts en position escamotée est également prévu, ce ressort étant désigné par la référence générale 24 sur cette figure 3.

L'extrémité du piston 18 en regard de la roue à dents biseautées comporte elle-même des dents telles que la dent désignée par la référence générale 25 sur cette figure, de manière, lors de l'application des impulsions de pression dans les moyens en forme de vérin et donc des déplacements du piston 18 correspondants, à faire tourner la roue à dents biseautées 20 dans le manchon 22. Les dents biseautées de la roue 20 sont alors également adaptées pour coopérer avec des crans successifs de hauteurs différentes du manchon 22 afin de définir des positions stables, actives et escamotées de la tige d'actionnement 21 des doigts et donc de ces doigts.

Deux crans successifs de hauteurs différentes du manchon sont par exemple désignés par les références générales 26 et 27 sur cette figure.

En position escamotée des moyens de commande 9, les dents de la roue 20 sont par exemple en appui contre les crans tels que le cran 26. Lors de l'application d'une pression dans les moyens en forme de vérin, le piston 18 provoque un déplacement de la roue à dents 20 et de la tige d'actionnement 21 à l'encontre de la sollicitation élastique du ressort 24 si la gâchette 15 est armée, c'est-à-dire repoussée, la tête étant en position correcte dans la grille.

Lors de cette poussée, les dents 25 du piston 18 tendent également à faire tourner la roue dentée. Cependant ce mouvement de rotation de la roue est empêché par la coopération des dents de la roue avec les bords du manchon 22 de chaque côté du cran 26 jusqu'au moment où les dents biseautées de la roue 20 peuvent franchir l'extrémité correspondante du manchon 22 pour venir coopérer avec le cran 27 de maintien des dents et donc de la tige d'actionnement 21 en position active de sortie des doigts de la tête d'accrochage.

Le blocage en position est alors assuré par la sollicitation du ressort 24 qui pousse la tige d'actionnement 21 et la roue à dents 20 à rester en position contre le cran 27.

La pression de fluide peut alors être relâchée dans les moyens en forme de vérin tout en conservant l'ancrage de l'aéronef dans la grille.

Une nouvelle application d'une impulsion de pression de fluide dans les moyens en forme de vérin provoque un nouveau déplacement angulaire de la roue à dents biseautées en regard du cran suivant correspondant à la position escamotée de la tige des moyens d'actionnement sous l'action du ressort 24 afin de débloquer la tête.

Il va de soi bien entendu que d'autres modes de réalisation de cet actionneur bistable à commande par applications d'impulsions de pression successives dans les moyens de forme de vérin, peuvent être envisagés.

On conçoit alors que l'utilisation d'un tel verrou mécanique bistable permet d'utiliser uniquement des impulsions de pression dans les moyens en forme de vérin et n'oblige plus à maintenir la pression dans celui-ci comme c'était le cas avec les moyens en forme de vérin de l'état de la technique.

Une seule impulsion de pression permet en effet de faire sortir les doigts et une seule autre impulsion de pression permet de les faire rentrer.

De plus, il permet également de modifier les moyens d'alimentation en fluide sous pression des moyens en forme de vérin.

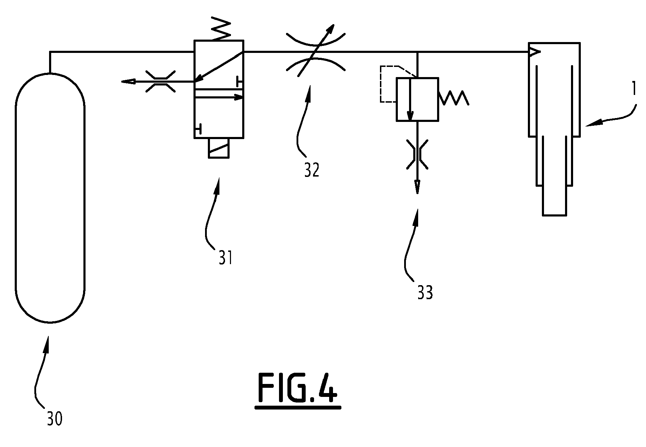

Un schéma synoptique de ces moyens d'alimentation est donné sur la figure 4.

En fait, les moyens d'alimentation peuvent comporter une source de fluide sous pression qui se présente par exemple sous la forme d'une cartouche consommable de gaz telle que par exemple une cartouche consommable de CO₂, désignée par la référence générale 30 sur cette figure.

Cette cartouche de gaz 30 est alors reliée en entrée de moyens formant électrovanne 3/2 normalement fermée, désignée par la référence générale 31, elle-même reliée à des moyens de restriction réglables permettant de limiter le débit de gaz lors du harponnage et de la purge, désignés par la référence générale 32.

Une soupape de sécurité réglée à une pression légèrement supérieure à la pression de harponnage souhaitée est également prévue, cette soupape étant désignée par la référence générale 33, le harpon étant quand à lui toujours désigné par la référence générale 1.

La commande à l'ouverture et à la fermeture des moyens formant électrovanne permet alors de piloter l'alimentation des moyens en forme de vérin sous la forme d'impulsions de pression.

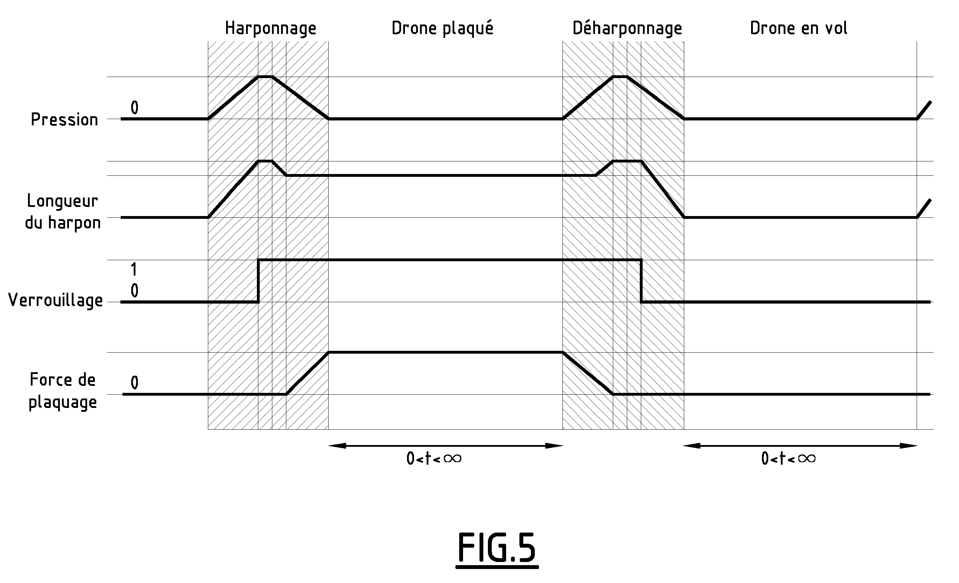

Ce fonctionnement impulsionnel est illustré sur la figure 5 qui fait apparaître que le harponnage et le désarponnage se font par applications successives d'impulsions de pression dans les moyens en forme de vérin, ce qui permet d'une part de déployer le harpon télescopique qui reste en positon déployée tant que la tête d'ancrage est verrouillée dans la grille et ce qui permet également d'obtenir une force de plaquage de l'aéronef sur la plate-forme.

On conçoit également que l'application d'une impulsion de pression par commande de l'ouverture des moyens formant électrovanne 31 décrits précédemment, permet aux portions de cylindre des moyens en forme de vérin, de se déployer afin de faire pénétrer la tête d'accrochage du harpon dans la grille.

La tête de harpon vient alors se loger dans une alvéole de la grille ce qui permet de repousser la gâchette d'armement 15 et donc au piston 18, sous l'action de la pression du fluide dans les moyens en forme de vérin, de pousser la tige d'actionnement 21 des doigts 8 vers la position de sortie de ces doigts afin de verrouiller la tête dans la grille.

Le verrou mécanique bistable rotatif permet de bloquer la tige et les doigts dans cette position active d'ancrage de la tête dans la grille et la pression de fluide peut alors être relâchée dans les moyens en forme de vérin, le ressort hélicoïdal 12 de rappel et de plaquage permettant de maintenir le drone plaqué en position sur la grille.

Lors de l'application d'une nouvelle impulsion de pression dans les moyens en forme de vérin, le piston 18 fait tourner la roue à dents biseautées 20 pour déverrouiller le verrou mécanique rotatif ce qui permet, lors du relâchement de la pression de fluide dans les moyens en forme de vérin, au ressort 24 de repousser la tige d'actionnement 21 des doigts, vers une position escamotée et à ceux-ci de revenir vers une position escamotée dans la tête d'ancrage, ce qui relâche cette tête d'ancrage de la grille et permet par l'intermédiaire du ressort hélicoïdal 12 de ramener les moyens en forme de vérin vers une position escamotée (figure 1).

On conçoit alors qu'une telle structure présente un certain nombre d'avantages par rapport aux harpons de l'état de la technique.

L'utilisation d'un vérin télescopique permet en effet de doubler la course de déploiement du harpon pour une même longueur repliée et donc de diminuer considérablement la longueur du harpon en position repliée ce qui permet de s'adapter aux contraintes d'encombrement liées à l'embarquement à bord d'un drone.

L'utilisation d'un ressort de plaquage et de rappel placé à l'extérieur des moyens en forme de vérin permet également d'obtenir une force de plaquage correcte contre la grille.

L'utilisation d'un actionneur bistable à verrou mécanique rotatif permet de maintenir le harpon dans sa position entre deux ordres impulsionnels de changement d'état à savoir, replié ou bloqué dans la grille.

Le passage d'un état à l'autre se fait par l'application d'une impulsion du fluide sous pression dans les moyens en forme de vérin. Ceci permet alors d'utiliser une cartouche consommable par exemple de gaz associée à des moyens de commande d'une électrovanne pour assurer l'alimentation.

Bien entendu, différents modes de réalisation des pièces décrites peuvent être envisagés et d'autres applications peuvent également être envisagées par exemple pour l'ancrage d'aéronefs sur des plates-formes pétrolières ou autres.

## Revendications

1. Harpon d'ancrage notamment d'un aéronef, apte à coopérer avec une grille d'ancrage (2) d'une plate-forme, comportant des moyens en forme de vérin (3) comprenant des moyens en forme de cylindre (4) dans lesquels se déplacent des moyens en forme de piston (5) munis d'une tige (6) s'étendant au-delà des moyens en forme de cylindre et dont l'extrémité libre comporte une tête de harpon (7) d'accrochage dans la grille (2), munie de doigts de retenue (8, 13, 14) dans celle-ci, déplaçables entre une position escamotée et une position active par des moyens de commande (9), les moyens en forme de vérin sont raccordés à une source de fluide sous pression (30) à travers des moyens de commande (31),
**caractérisé en ce que** cette source de fluide sous pression comporte une cartouche consommable de gaz (30).

2. Harpon d'ancrage selon la revendication 1, **caractérisé en ce que** le gaz est du CO₂

3. Harpon d'ancrage selon la revendication 1 ou 2, **caractérisé en ce que** les moyens de commande comprennent des moyens formant électrovanne (31) pilotés à l'ouverture et à la fermeture pour alimenter les moyens en forme de vérin.

4. Harpon d'ancrage selon l'une quelconque des revendications précédentes, **caractérisé en ce que** les moyens en forme de cylindre (4) du vérin comportent au moins deux portions de cylindre (10, 11) télescopiques l'une dans l'autre et déplaçables entre une position escamotée l'une dans l'autre et une position active en saillie l'une par rapport à l'autre.

5. Harpon d'ancrage selon l'une quelconque des revendications précédentes, **caractérisé en ce que** les moyens de commande (9) des déplacements des doigts comprennent un piston de commande (18) déplaçable à coulissement dans la tige du vérin et associé à un actionneur bistable (19) des doigts, déplaçable entre des positions escamotée et active de sortie des doigts par applications successives d'impulsions de pression dans les moyens en forme de vérin.

6. Harpon d'ancrage selon la revendication 5, caractérisé en que l'actionneur bistable est un verrou mécanique rotatif (19)

7. Harpon d'ancrage selon la revendication 6, caractérisé en que l'actionneur bistable (19) comporte une roue à dents biseautées (20) interposée entre le piston de commande (18) et une tige d'actionnement (21) des doigts, disposés dans un manchon (22) relié à la tige de vérin, l'extrémité du piston (18) en regard de la roue à dents biseautées (20) comportant elle-même des dents (25), de manière, lors de l'application des impulsions de pression dans les moyens en forme de vérin et donc des déplacements du piston de commande, à faire tourner la roue à dents biseautées (20) dans le manchon (22), les dents de la roue (20) étant également adaptées pour coopérer avec des crans successifs de hauteurs différentes (26, 27) du manchon (22), afin de définir des positions stables, active et escamotée, de la tige d'actionnement (21) des doigts.

8. Harpon d'ancrage selon la revendication 7, **caractérisé en ce qu'**il comporte un ressort (24) de sollicitation de la tige d'actionnement (21) des doigts en position escamotée.

9. Harpon d'ancrage selon l'une quelconque des revendications précédentes, **caractérisé en ce que** l'extrémité correspondante des moyens en forme de vérin est associée à l'aéronef et **en ce qu'**un ressort hélicoïdal (12) de rappel et de plaquage est interposé entre cette extrémité du vérin et la tête de harpon (7).

10. Harpon d'ancrage selon la revendication 9, **caractérisé en ce que** le ressort hélicoïdal (12) est disposé autour des moyens en forme de vérin.

11. Harpon d'ancrage selon l'une quelconque des revendications précédentes, **caractérisé en ce qu'**il comporte des moyens à gâchette (15) d'interdiction du déplacement des doigts (8, 13, 14) vers leur position active tant que la tête de harpon n'est pas en position de butée dans la grille d'ancrage (2).

12. Système d'ancrage notamment d'un aéronef de type drone à voilure tournante, **caractérisé en ce qu'**il comporte un harpon d'ancrage selon l'une quelconque des revendications précédentes.

## Patentansprüche

1. Verankerungsharpune, insbesondere eines Luftfahrzeugs, die in der Lage ist, mit einem Verankerungsgitter (2) einer Plattform zusammenzuwirken, aufweisend Mittel in Form eines Hubzylinders (3), die Mittel in Form eines Zylinders (4) aufweisen, in welchen sich Mittel in Form eines Kolbens (5) verlagern, die mit einer Stange (6) versehen sind, die sich über die Mittel in Form eines Zylinders hinaus erstreckt und deren freies Ende einen Harpunenkopf (7) zur Verankerung in dem Gitter (2) aufweist, der in sich mit Rückhaltefingern (8, 13, 14) ausgestattet ist, die mittels Steuermitteln (9) zwischen einer Einfahrposition und einer Aktivposition verlagerbar sind, wobei die Mittel in Form eines Hubzylinders über Steuermittel (31) mit einer Druckfluidquelle (30) verbunden sind, **dadurch gekennzeichnet, dass** diese Druckfluidquelle eine Gasbetreibbare Kartusche (30) aufweist.

2. Verankerungsharpune gemäß Anspruch 1, **dadurch gekennzeichnet, dass** das Gas CO₂ ist.

3. Verankerungsharpune gemäß Anspruch 1 oder 2, **dadurch gekennzeichnet, dass** die Steuermittel Magnetventil-Mittel (31) aufweisen, die auf offen und auf geschlossen gesteuert werden, um die Mittel in Form eines Hubzylinders zu versorgen.

4. Verankerungsharpune gemäß irgendeinem der vorhergehenden Ansprüche, **dadurch gekennzeichnet, dass** die Mittel in Form eines Hubzylinders (4) wenigstens zwei teleskopische Zylinderabschnitte (10, 11) aufweisen, von denen einer im anderen vorliegt und die zwischen einer Ineinander-Eingefahren-Position und einer Aktiv-Voneinander-Vorstehen-Position verlagerbar sind.

5. Verankerungsharpune gemäß irgendeinem der vorhergehenden Ansprüche, **dadurch gekennzeichnet, dass** die Mittel zur Steuerung (9) der Verlagerungen der Finger einen Steuerkolben (18) aufweisen, der in der Stange des Hubzylinders verschiebe-verlagerbar ist und der mit einem bistabilen Aktuator (19) der Finger verbunden ist und der zwischen einer Finger-Einfahrposition und einer Finger-Aktiv-Ausfahrposition mittels sukzessiver Anwendungen von Druckimpulsen in den Mitteln in Form eines Hubzylinders verlagerbar ist.

6. Verankerungsharpune gemäß Anspruch 5, **dadurch gekennzeichnet, dass** der bistabile Aktuator ein mechanischer Drehriegel (19) ist.

7. Verankerungsharpune gemäß Anspruch 6, **dadurch gekennzeichnet, dass** der bistabile Aktuator (19) ein Rad mit angeschrägten Zähnen (20) aufweist, das zwischen dem Steuerkolben (18) und einer Stange zur Betätigung (21) der Finger angeordnet ist, welche in einem Stutzen (22) angeordnet sind, der mit der Stange des Hubzylinders verbunden ist, wobei das Ende des Kolbens (18), das dem Rad mit angeschrägten Zähnen (20) zugewandt ist, seinerseits Zähne (25) aufweist, sodass, während der Anwendung der Druckimpulse in den Mitteln in Form eines Hubzylinders und daher der Verlagerungen des Steuerkolbens, das Rad mit angeschrägten Zähnen (20) in dem Stutzen (22) gedreht wird, wobei die Zähne des Rades (20) auch angepasst sind zum Zusammenwirken mit sukzessiven Rasten unterschiedlicher Höhe (26, 27) des Stutzens (22), um eine stabile Einfahr- und Ausfahr-Position der Stange zur Betätigung (21) der Finger zu definieren.

8. Verankerungsharpune gemäß Anspruch 7, **dadurch gekennzeichnet, dass** sie eine Feder (24) zur Vorspannung der Stange zur Betätigung (21) der Finger in die Einfahrposition aufweist.

9. Verankerungsharpune gemäß irgendeinem der vorhergehenden Ansprüche, **dadurch gekennzeichnet, dass** das zu den Mitteln in Form eines Hubzylinders gehörende Ende mit einem Luftfahrzeug verbunden ist und dass eine Rückstell- und Fassen-Schraubenfeder (12) zwischen diesem Ende des Hubzylinders und dem Harpunenkopf (7) zwischengeordnet ist.

10. Verankerungsharpune gemäß Anspruch 9, **dadurch gekennzeichnet, dass** die Schraubenfeder (12) um die Mittel in Form eines Hubzylinders herum angeordnet ist.

11. Verankerungsharpune gemäß irgendeinem der vorhergehenden Ansprüche, **dadurch gekennzeichnet, dass** sie aufweist Abzugs-Mittel (15) zur Unterbindung der Verlagerung der Finger (8, 13, 14) zu deren Aktiv-Position hin, solange der Harpunenkopf nicht in einer in dem Verankerungsnetz (2) anschlagenden Position ist.

12. Verankerungssystem, insbesondere eines Luftfahrzeugs des Typs Drehflügler, **dadurch gekennzeichnet, dass** es eine Verankerungsharpune gemäß irgendeinem der vorhergehenden Ansprüche aufweist.

## Claims

1. An anchoring harpoon notably of an aircraft, capable of cooperating with an anchoring grate (2) of a platform, including jack means (3) comprising cylinder means (4) in which move piston means (5) provided with a rod (6) extending beyond the cylinder means and the free end of which includes a harpoon head (7) for anchoring the harpoon in the grate (2), provided with retaining fingers (8, 13, 14) for retention therein, which are movable between a retracted position and an active position by control means (9), the jack means being connected to a pressurized fluid source (30) through control means (31), **characterized in that** the source of pressurized fluid includes a consumable gas cartridge (30).

2. The anchoring harpoon according to claim 1, **characterized in that** the gas is CO₂.

3. The anchoring harpoon according to claim 1 or 2, **characterized in that** the control means comprise a solenoid valve means (31) controlled through its opening and closing for feeding the jack means.

4. The anchoring harpoon according to any of the preceding claims, **characterized in that** the cylinder means (4) of the jack include at least two cylinder portions (10, 11) telescoping one in the other and which are movable between a retracted position in one another and an active position in which one is protruding relative to the other.

5. The anchoring harpoon according to any of the preceding claims, **characterized in that** the means (9) for controlling the movements of the fingers comprise a control piston (18) which is slidably movable in the rod of the jack and associated with a bistable actuator (19) of the fingers, which is movable between a retracted position and an active position in which the fingers are deployed by successive applications of pressure pulses in the jack means.

6. The anchoring harpoon according to claim 5, **characterized in that** the bistable actuator is a rotary mechanical lock (19).

7. The anchoring harpoon according to claim 6, **characterized in that** the bistable actuator (19) includes a wheel (20) with beveled teeth interposed between the control piston (18) and a rod (21) for actuating the fingers, positioned in a sleeve (22) connected to the jack rod, the end of the piston (18) facing the wheel (20) with beveled teeth itself including teeth (25) so as to rotate the wheel (20) with beveled teeth in the sleeve (22) upon applying pressure pulses in the jack means and therefore movements of the control piston, the teeth of the wheel (20) being also adapted so as to cooperate with successive notches of different heights (26, 27) of the sleeve (22), in order to define stable active and retracted positions, of the rod (21) for actuating the fingers.

8. The anchoring harpoon according to claim 7, **characterized in that** it includes a spring (24) for urging the rod (21) for actuating the fingers in the retracted position.

9. The anchoring harpoon according to any of the preceding claims, **characterized in that** the corresponding end of the jack means is associated with the aircraft and **in that** a helical return and flattening spring (12) is interposed between this end of the jack and the harpoon head (7).

10. The anchoring harpoon according to claim 9, **characterized in that** the helical spring (12) is arranged around the jack means.

11. The anchoring harpoon according to any of the preceding claims, **characterized in that** it includes triggering means (15) for preventing movement of the fingers (8, 13, 14) towards their active position as long as the harpoon head is not abutting in the anchoring grate (2).

12. An anchoring system, notably for an aircraft of the drone type with a rotary wing, **characterized in that** it includes an anchoring harpoon according to any of the preceding claims.
